(19) Europäisches Patentamt

European Patent Office

Office européen des brevets

(11) **EP 4 734 160 A1**

(12) **EUROPEAN PATENT APPLICATION**

(43) Date of publication:
**29.04.2026 Bulletin 2026/18**

(21) Application number: **25204106.6**

(22) Date of filing: **23.09.2025**

(51) International Patent Classification (IPC):
*H01M 4/04* (2006.01)     *H01M 4/62* (2006.01)
*H01M 4/66* (2006.01)     *H01M 10/0587* (2010.01)
*H01M 50/103* (2021.01)   *H01M 50/107* (2021.01)

(52) Cooperative Patent Classification (CPC):
**H01M 50/107; H01M 4/0404; H01M 4/625;
H01M 4/667; H01M 10/0587; H01M 50/103;**
H01M 2004/021

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.10.2024 US 202418911055**

(71) Applicant: **Tesla, Inc.**
**Austin, TX 78725 (US)**

(72) Inventors:
• **SHAH, Vivek Bharat**
**Austin, 78725 (US)**

• **FU, Boshen**
**Austin, 78725 (US)**
• **SMITH, Bryce Gregory**
**Austin, 78725 (US)**
• **MICHEL-GROSJEAN, Leo Paul Guy**
**Austin, 78725 (US)**
• **ZHANG, Chunlei**
**Austin, 78725 (US)**
• **TYLER, Matthew**
**Austin, 78725 (US)**

(74) Representative: **Zacco Sweden AB**
**P.O. Box 5581**
**Löjtnantsgatan 21**
**114 85 Stockholm (SE)**

(54) **SHAPED ELECTRODE FILMS, AND METHODS THEREOF**

(57)    A method of forming a shaped electrode film and products thereof, are described. The electrode film having a shaped edge may aid in the core circularity of electrode assemblies, which may improve the structural stability of energy storage devices with minimal change in electrode assembly design and manufacturing.

**FIG. 2A**

EP 4 734 160 A1

**Description**

BACKGROUND

Field

This disclosure relates to electrode films for energy storage devices, and methods thereof. In particular, the method relates to forming shaped electrode films.

Description of the Related Art

Typical energy storage devices include an electrode film. The electrode film may be used to form an electrode assembly using a winding process. Many current electrode assemblies use a jelly roll design in which the electrodes and separators are rolled together and have a cathode tab and an anode tab to connect to the positive and negative terminals of the electrode assembly. Generally, wound electrode films include imperfections (e.g., a natural kink, weak point, stress point, and/or electrode buckling zone) that affect the circularity of the electrode assembly, which in turn, may affect the lifetime of the energy storage device.

As such, improving the circularity of energy storage devices manufactured at high volumes may be advantageous.

SUMMARY

For purposes of summarizing the invention and the advantages achieved over the prior art, certain objects and advantages of the invention are described herein. Not all such objects or advantages may be achieved in any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

In one aspect, an energy storage device is described. The energy storage device includes: an electrode assembly and an electrolyte disposed within a housing; wherein the electrode assembly comprises: a first electrode, a second electrode and a separator positioned between the first electrode and the second electrode; wherein the first electrode comprises a shaped electrode film and a current collector, wherein the shaped electrode film is disposed over the current collector; wherein the shaped electrode film comprises an active material, a length, a length end, a width wherein the length is greater than the width, and a shaped edge located at the length end; and wherein the shaped edge comprises a taper angle and a taper distance.

In another aspect, a shaped electrode film is described. The shaped electrode film includes: an active material; a length, a length end and a width, wherein the length is greater than the width; and a shaped edge located at the length end, wherein the shaped edge comprises a taper angle and a taper distance.

In some embodiments, the shaped electrode film further includes a second shaped edge located at a second length end. In some embodiments, the shaped edge is selected from the group consisting of an angular edge, a double-angular edge, a chevron edge, a double-chevron edge, a rounded edge, a double-rounded edge, an inverse thereof, a reverse thereof, and combinations thereof. In some embodiments, the taper angle is about 10°-45°. In some embodiments, the taper distance is at most about 25 mm.

In another aspect, a shaped electrode is described. The shaped electrode includes: a shaped electrode film, and a current collector, wherein the shaped electrode film is disposed over the current collector.

In another aspect, an electrode assembly is described. The electrode assembly includes: a shaped electrode, a second electrode; and a separator positioned between the shaped electrode and the second electrode.

In some embodiments, the electrode assembly is a wound electrode assembly. In some embodiments, the second electrode comprises a second shaped edge. In some embodiments, the electrode assembly is selected from the group consisting of a cylindrical energy storage device, and a spiral-wound prismatic energy storage device. In some embodiments, the electrode assembly comprises a normalized circularity value of at least about 0.8. In some embodiments, the electrode assembly comprises a normalized circularity value of at least about 0.9.

In another aspect, an energy storage device is described. The energy storage device includes: an electrode assembly; an electrolyte; and a housing, wherein the electrode assembly and the electrolyte are disposed within the housing.

In another aspect, a method of forming a shaped electrode film is described. The method includes: providing an electrode film comprising a length, a length end and a width, wherein the length is greater than the width; and shaping the length end to form a shaped electrode film comprising a shaped edge.

In some embodiments, the method further includes forming a shaped electrode comprising the shaped electrode film disposed over a current collector. In some embodiments, the current collector is a shaped edge current collector. In some embodiments, an adhesive layer is disposed between the shaped electrode film and the current collector. In some embodiments, the adhesive layer is a shaped edge adhesive layer. In some embodiments, the method further includes disposing the electrode film over a current collector. In some embodiments, shaping the length end includes removing a scrap electrode film of the electrode film from the current collector. In some embodiments, the method further includes disposing the shaped electrode film over a current collector.

BRIEF DESCRIPTION OF THE DRAWINGS

FIG. 1A is a schematic illustration of an unshaped electrode film.
FIG. 1B is a schematic illustration of an electrode assembly showing cross sections of unshaped electrode films wound into a jelly roll.
FIG. 2A is a schematic illustration of a shaped electrode film including an angular edge, according to some embodiments.
FIG. 2B is a schematic illustration of an electrode assembly, according to some embodiments, showing cross sections of shaped electrode films wound into a jelly roll.
FIG. 3A is a schematic illustration of a shaped electrode film including a chevron edge, according to some embodiments.
FIG. 3B is a schematic illustration of a shaped electrode film including a rounded edge, according to some embodiments.
FIG. 3C is a schematic illustration of a shaped electrode film including a double-chevron edge, according to some embodiments.
FIG. 4A is a flowchart of a method of forming a shaped electrode film, according to some embodiments.
FIG. 4B is a flowchart of a method of forming a shaped electrode including a shaped electrode film, according to some embodiments.
FIG. 4C is another flowchart of a method of forming a shaped electrode including a shaped electrode film, according to some embodiments.
FIG. 5A is a schematic illustration of a shaped electrode including a shaped electrode film and a current collector, according to some embodiments.
FIG. 5B is a schematic illustration of a shaped electrode including a shaped electrode film and a shaped edge current collector, according to some embodiments.
FIG. 5C is a schematic illustration of a shaped electrode including a shaped electrode film, an adhesive layer, and a current collector, according to some embodiments.
FIG. 5D is a schematic illustration of a shaped electrode including a shaped electrode film, a shaped edge adhesive layer, and a current collector, according to some embodiments.
FIG. 5E is a schematic illustration of a double-sided shaped electrode including shaped electrode films, according to some embodiments.

It will be clearly understood though, that the examples and figures are for illustrative purposes only, and are not necessarily restrictive of the scope of the present invention.

DETAILED DESCRIPTION

Although certain preferred embodiments and examples are disclosed below, the inventive subject matter extends beyond the specifically disclosed embodiments to other alternative embodiments and/or uses and to modifications and equivalents thereof. Thus, the scope of the claims appended hereto is not limited by any of the particular embodiments described below. For example, in any method or process disclosed herein, the acts or operations of the method or process may be performed in any suitable sequence and are not necessarily limited to any particular disclosed sequence. Various operations may be described as multiple discrete operations, in turn, in a manner that may be helpful in understanding certain embodiments; however, the order of description should not be construed to imply that these operations are order-dependent. Additionally, the structures, systems, and/or devices described herein may be embodied as integrated components or as separate components. For purposes of comparing various embodiments, certain aspects and advantages of these embodiments are described. Not necessarily all such aspects or advantages are achieved by any particular embodiment. Thus, for example, various embodiments may be carried out in a manner that achieves or optimizes one advantage or group of advantages as taught herein without necessarily achieving other aspects or advantages as may also be taught or suggested herein.

Electrode films with shaped edges (i.e., non-straight edge), and methods thereof, are described. By utilizing a shaped electrode film in a wound electrode assembly of an energy storage device, circularity imperfections in the wound assembly (e.g., kinks, weak points, stress points, and/or electrode buckling zones) may be distributed at different circumferential locations of the electrode assembly, resulting in an improved winding circularity of the electrode assembly core. As such, shaped electrodes providing improved circularity may aid in preventing electrode buckling during post-winding, electrode assembly and/or cycling and improve energy storage device longevity.

Shaped Electrode Films

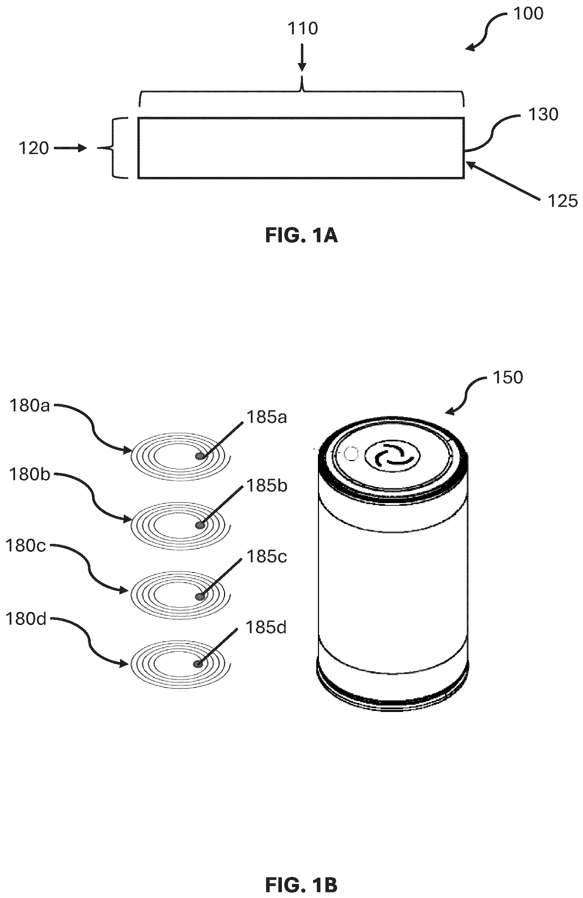

An electrode film may be produced or formed with various unshaped and shaped edges. An unshaped electrode film (e.g., baseline, straight edge, rectangular shaped) may include an edge shaped like a rectangle. For example, FIG. 1A is a schematic illustration of an unshaped electrode film 100. As shown in FIG. 1A, unshaped electrode film 100 includes a length 110, a width 120, a length end 125, and an unshaped edge 130 on the length end 125. The unshaped electrode film 100 is shown as a rectangle, where all intersecting sides form right angles.

FIG. 1B is a schematic illustration of an energy storage device 150 that includes a wound unshaped electrode film, and horizontal cross-sections 180a-180d of the wound unshaped electrode film. As the wound electrode film is unshaped, horizontal cross-sections 180a-180d show corresponding leading edges 185a-185d (i.e., terminal edges), respectively, of the unshaped edge aligned over one another vertically.

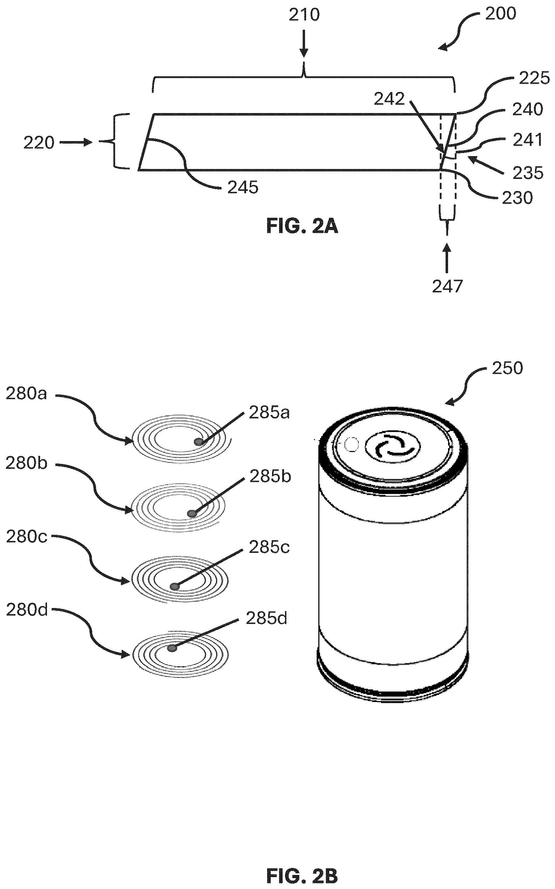

FIG. 2A is a schematic illustration of a shaped electrode film 200 including an angular edge, according to some embodiments. As shown in FIG. 2A, a shaped electrode film 200 includes a length 210, a width 220, a length end 235, a first corner 225 on the length end 235, a second corner 230 on the length end 235, and a shaped edge 240 on the length end 235. The shaped edge 240 includes a taper angle 242 measured as the angle made by the shaped edge 240 from the first corner 225, and a taper distance 247 measured as the horizontal length distance between a first corner 225 and a second corner 230. The shaped electrode film 200 also includes a second shaped edge 245 opposite, reverse, or inverse the shape of the shaped edge 240. The shaped edge 240 is an angular edge, wherein the shaped edge 240 forms a single straight line at a non-perpendicular (i.e., not 90°) taper angle 242 between the shaped edge 240 and a baseline edge 241.

FIG. 2B is a schematic illustration of an energy storage device 250 that includes a wound shaped electrode film, and horizontal cross-sections 280a-280d of the wound shaped electrode film. As the wound electrode film is shaped, horizontal cross-sections 280a-280d show corresponding internal leading edges 285a-285d (i.e., terminal edges), respectively, of the shaped edge which does not align over one another vertically and instead are located at various circumferential positions at the core of the energy storage device. The wound shaped electrode film is shown including a second shaped edge, and therefore, horizontal cross-sections 280a-280d also show external leading edges that do not align over one another vertically and instead are located at various circumferential positions at the core of the energy storage device.

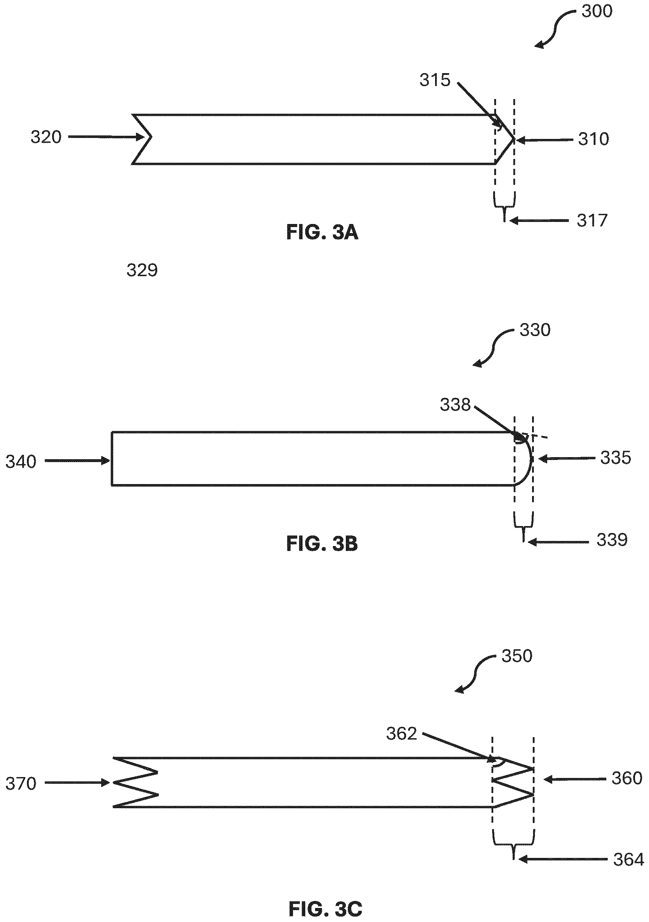

Although FIG. 2A illustrates an electrode film 200 with an angular edge, in some embodiments, shaped electrode films with other shapes for the shaped edges are possible. For example, FIG. 3A is a schematic illustration of a shaped electrode film 300 including a chevron edge as the shape of a shaped edge 310 and an inverse or reverse chevron edge as the shape of the second shaped edge 320. The shaped edge 310 is shown with a shaped angle 315 for the chevron edge shape, and a taper distance 317. It is understood that the chevron edge shape includes an additional shaped angle, and the inverse or reverse chevron edge shape includes two additional shaped angles and an additional taper distance.

FIG. 3B is a schematic illustration of a shaped electrode film 330 including a rounded edge as the shape of the shaped edge 335, according to some embodiments. As shown in FIG. 3B, the shaped edge 335 is shown with a corner shaped angle 338 for the rounded edge shape, and a taper distance 339. The shaped electrode film 330 also includes an unshaped edge 340 opposite the shaped edge 335. It is understood that the rounded edge shape includes an infinite number of taper angles along its arced shape, although only the corner shaped angle 338 is shown.

FIG. 3C is a schematic illustration of a shaped electrode film 350 including a double-chevron edge as the shape of the shaped edge 360, according to some embodiments. As shown in FIG. 3C, shaped edge 360 is shown with a first taper angle 362 and a taper distance 364. The shaped electrode film 350 also includes a second shaped edge 370 with an inversed or reversed double-chevron edge. It is understood that the double-chevron edge shape includes additional shaped angles, and the inverse or reverse double-chevron edge shape includes additional shaped angles and an additional taper distance.

In some embodiments, the length of the electrode film is, is about, is at least, or is at least about, 1 m, 1.5 m, 2 m, 2.5 m, 3.0 m, 3.5 m, 4 m, 4.5 m, 5 m, 5.5 m, 6 m, 6.5 m, 7 m, or any range of values therebetween. In some embodiments, the length is greater than the width.

In some embodiments, the width of the electrode film is, is about, is at least, or is at least about, 50 mm, 55 mm, 60 mm, 65 mm, 70 mm, 75 mm, 80 mm, 85 mm, 90 mm, 95 mm, 100 mm, 105 mm, 110 mm, 115 mm, 120 mm, 125 mm, 130 mm, 135 mm, 140 mm, 145 mm, 150 mm, or any range of values therebetween.

In some embodiments, the taper distance of the electrode film is, is about, is at least, or is at least about, 0.1 mm, 0.5 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, 10 mm, 15 mm, 20 mm, 25 mm, 30 mm, or any range of values therebetween.

In some embodiments, the shaped edge is selected from the group consisting of an angular edge, a double-angular edge, a chevron edge, a double-chevron edge, a rounded edge, a double-rounded edge, an inverse thereof, a reverse thereof, and combinations thereof. In some embodiments, a shaped electrode film includes an unshaped edge.

In some embodiments, the shaped edge comprises a taper angle of, of about, of at least, or of at least about, 0.1°, 0.2°, 0.3°, 0.4°, 0.5°, 0.6°, 0.7°, 0.8°, 0.9°, 1°, 1.1°, 1.2°, 1.3°, 1.4°, 1.5°, 1.6°, 1.7°, 1.8°, 1.9°, 2°, 2.1°, 2.2°, 2.3°, 2.4°, 2.5°, 2.6°, 2.7°, 2.8°, 2.9°, 3°, 4°, 5°, 6°, 7°, 8°, 9°, 10°, 11°, 12°, 13°, 14°, 15°, 16°, 17°, 18°, 19°, 20°, 21°, 22°, 23°, 24°, 25°, 26°, 27°, 28°, 29°, 30°, 31°, 32°, 33°, 34°, 35°, 36°, 37°, 38°, 39°, 40°, 41°, 42°, 43°, 44° or 45°, or any range of values therebetween. In some embodiments, the shaped edge comprises a taper angle of, of about, of at least, or of at least about, 10°-45°. In some embodiments, the shaped edge comprises a taper angle of, of about, of at least, or of at least about, 10°-15°. In some embodiments, the shaped electrode film may comprise more than one taper angle. In some embodiments, the shaped electrode film may comprise an infinite number of angles (e.g., for a rounded edge electrode film).

In some embodiments, the electrode film comprises a thickness of, of about, of at least, or at least about, 1000 $\mu$m, 900 $\mu$m, 800 $\mu$m, 700 $\mu$m, 600 $\mu$m, 500 $\mu$m, 400 $\mu$m, 300 $\mu$m, 250 $\mu$m, 200 $\mu$m, 150 $\mu$m, 100 $\mu$m, 90 $\mu$m, 80 $\mu$m, 70 $\mu$m, 60 $\mu$m, 50 $\mu$m, 40 $\mu$m, 30 $\mu$m, 20 $\mu$m, 15 $\mu$m, 10 $\mu$m, or any range of values therebetween.

Method of Forming a Shaped Electrode Film

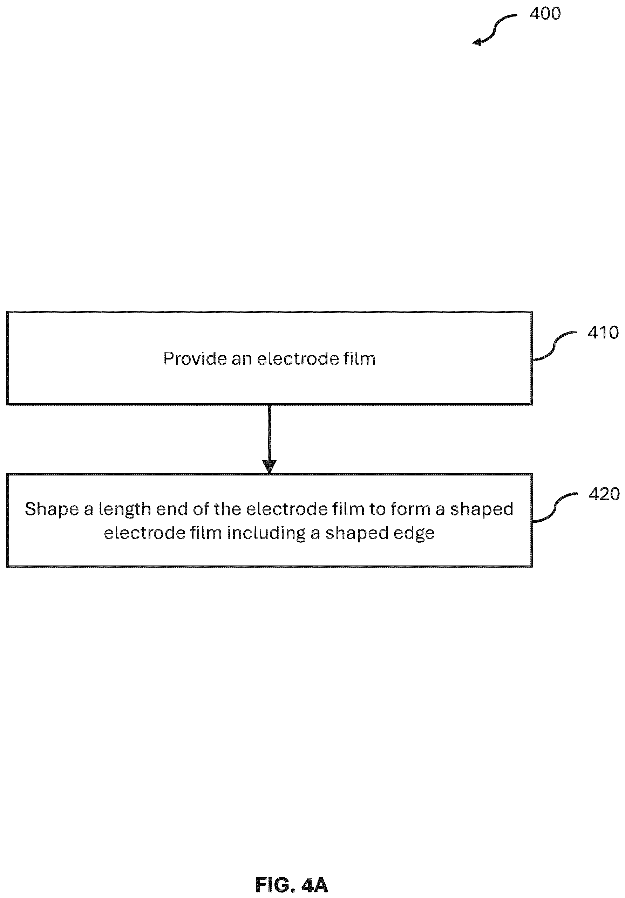

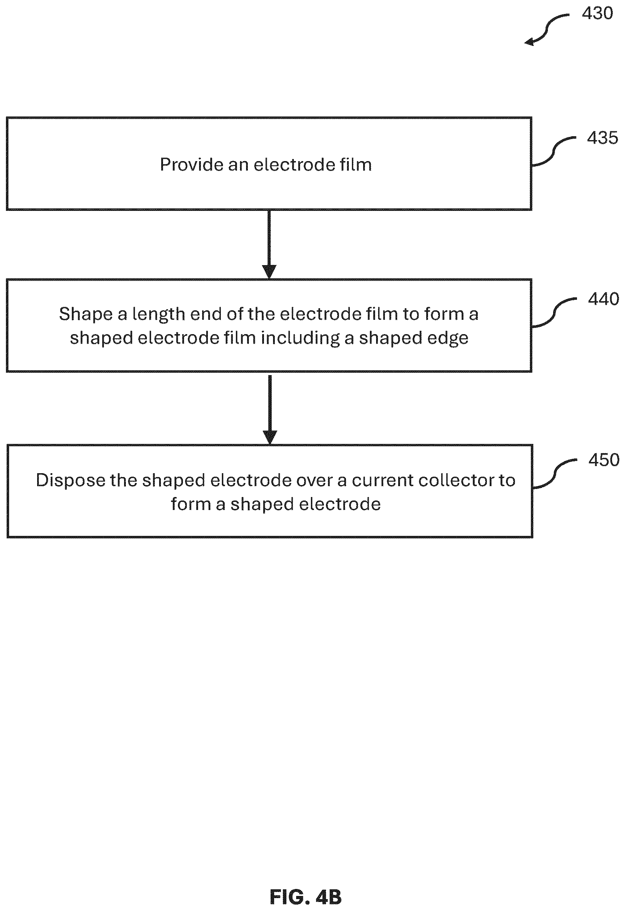

FIG. 4A is a flowchart showing a method of forming a shaped electrode film, according to some embodiments. As shown in FIG. 4A, forming process 400 includes step 410 that provides an electrode film, and step 420 that shapes a length end of the electrode film to form a shaped electrode film including a shaped edge. FIG. 4B is a flowchart showing a method of forming a shaped electrode including a shaped electrode film, according to some embodiments. As shown in FIG. 4B, forming process 430 includes step 435 that provides an electrode film, step 440 of shaping a length end of the electrode film to form a shaped electrode film including a shaped edge, and step 450 of disposing the shaped electrode over a current collector to form an electrode.

In some embodiments, a length end may be shaped by cutting (e.g., manual cut, a machine cut, a stamped cut) the electrode film, current collector and/or the electrode. In some embodiments, the length end of the electrode film may be shaped by removing a scrap electrode film from the current collector (e.g., shaped by peeling). In some embodiments, an adhesive layer may be disposed over the current collector and the length end may be shaped by removing a scrap electrode film of the electrode film from the current collector.

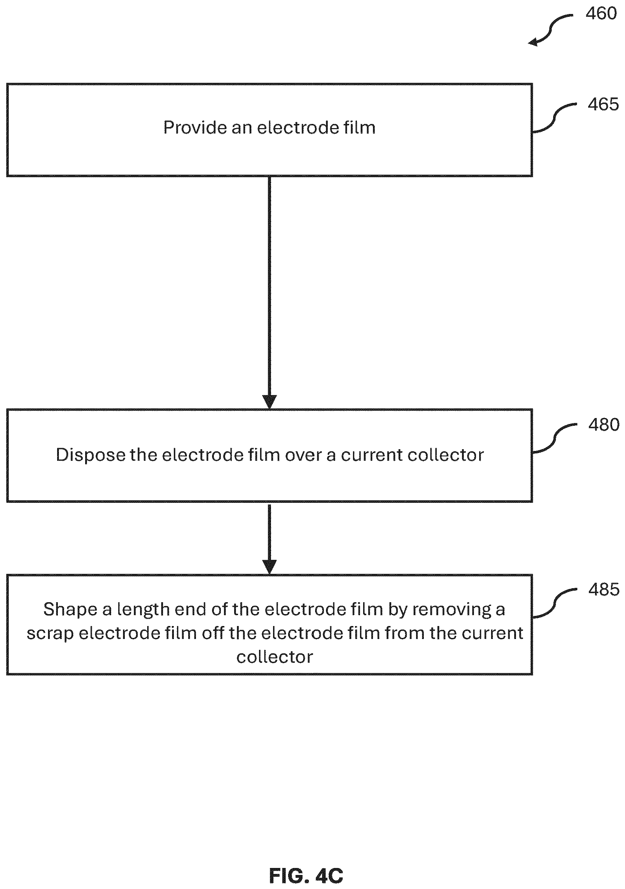

FIG. 4C is another flowchart showing a method of forming a shaped electrode including a shaped electrode film, according to some embodiments. As shown in FIG. 4C, forming process 460 includes step 465 that provides an electrode film, step 480 of disposing the electrode film over a current collector, and step 485 that shapes a length end of the electrode film by removing (e.g., peeling) a scrap electrode film off the electrode film from the current collector.

In some embodiments, the method of forming the electrode may include a shaped edge current collector and/or forming a shaped edge current collector. In some embodiments, the method of forming the electrode may include disposing an adhesive layer (e.g., carbon coating layer) on the current collector and/or between the electrode film and the current collector. In some embodiments, the carbon coating layer may be processed to form a shaped edge and/or may be a shaped edge carbon coating layer.

Shaped Electrodes and Methods

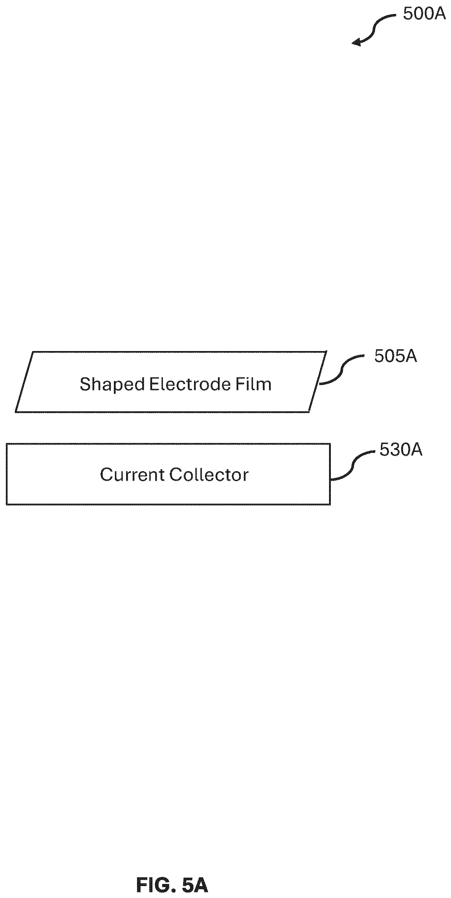

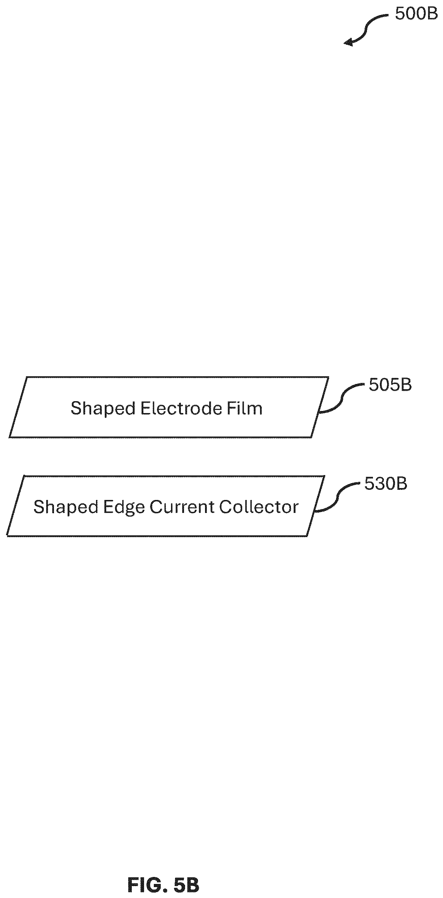

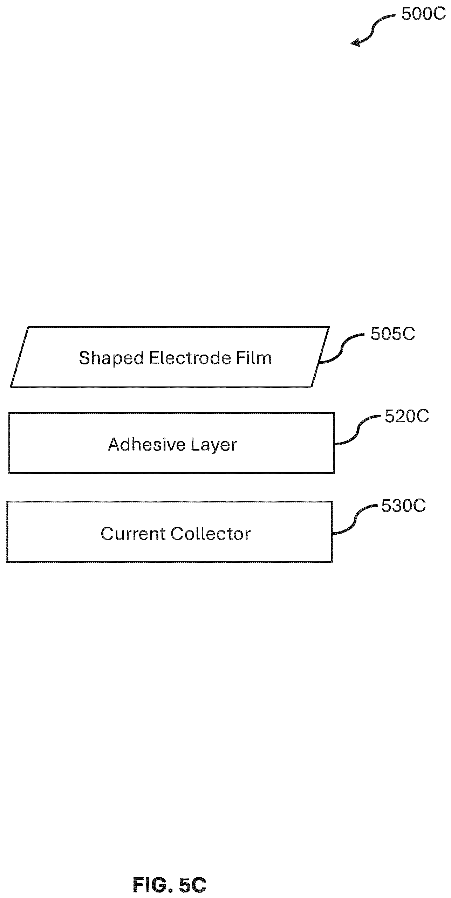

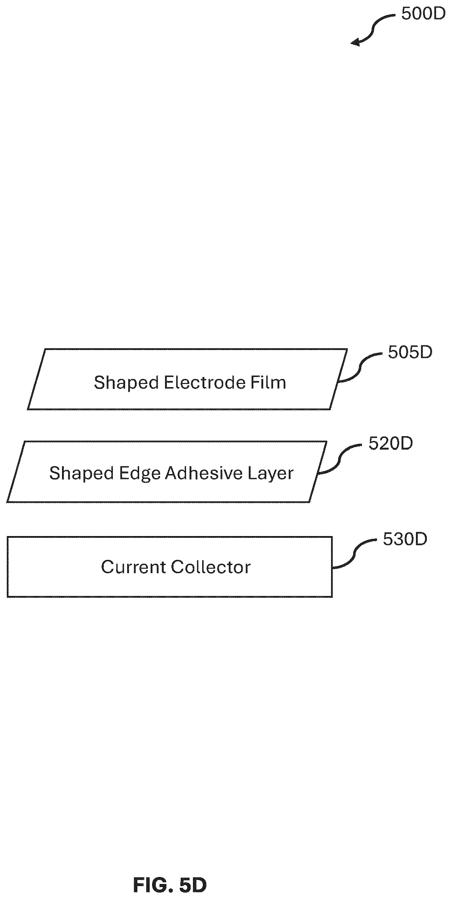

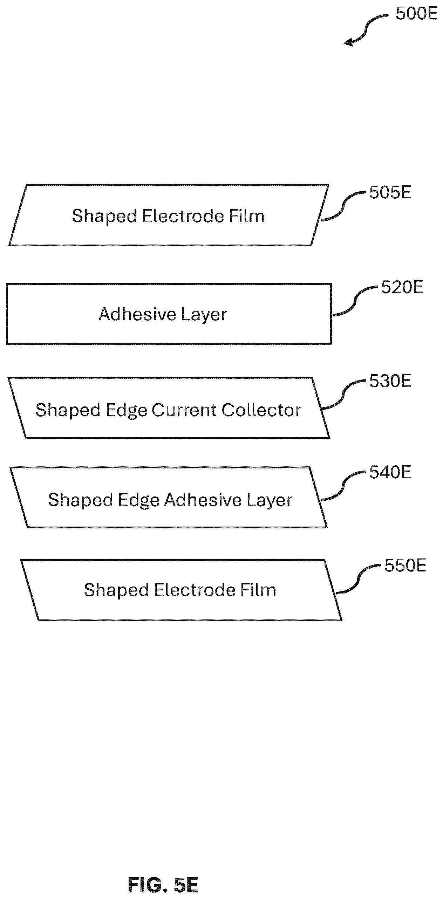

Electrodes and energy storage devices may include shaped electrode films. For example, FIG. 5A is a schematic illustration of the layers of a shaped electrode 500A that includes a shaped electrode film 505A disposed over an unshaped current collector 530A. FIG. 5B is a schematic illustration of the layers of a shaped electrode 500B that includes a shaped electrode film 505B disposed over a shaped edge current collector 530B. FIG. 5C is a schematic illustration of the layers of a shaped electrode 500C that includes a shaped electrode film 505C disposed over an adhesive layer 520C that is disposed over an unshaped current collector 530C. FIG. 5D is a schematic illustration of the layers of a shaped electrode 500D that includes a shaped electrode film 505D disposed over a shaped edge adhesive layer 520D, which is disposed over an unshaped current collector 530D. FIG. 5E is a schematic illustration of the layers of a double-sided shaped electrode 500E that includes shaped electrode films 505E, 550E, an adhesive layer 520E, a shaped edge current collector 530E, and a shaped edge adhesive layer 540E.

In some embodiments, the different combinations of shaped and unshaped electrode films, current collectors, and adhesive layers in an energy storage device may provide improved control of normalized circularity, ease of manufacturability, and prevention of electrode assembly buckling during cycling or usage. In some embodiments, a shaped electrode is an electrode that includes a shaped electrode film, and may optionally include a shaped edge current collector and/or a shaped edge adhesive layer.

In some embodiments, the electrode and/or current collector comprises an adhesive layer. In some embodiments, the shaped electrode film is disposed over and adheres to the adhesive layer. In some embodiments, the adhesive layer comprises a carbon coating layer. In some embodiments, the carbon coating layer comprises an electrically conductive carbon coating or layer. In some embodiments, the shaped electrode and/or current collector comprises an electrode foil and an insulator (e.g., carbon coating layer) disposed over all, substantially all or a portion of the current collector. In some embodiments, the current collector comprises a single adhesive layer. In some embodiments, the adhesive layer is a patterned adhesive layer. In some embodiments, the adhesive layer comprises a plurality of adhesive elements separated from one another. In some embodiments, the adhesive layer is size-on-size with a shaped electrode film disposed over the adhesive layer. In some embodiments, the adhesive layer is larger than a shaped electrode film disposed over the adhesive layer. In some embodiments, an adhesive layer is disposed over a current collector to form a coated current collector, and a shaped electrode film is disposed over the coated current collector to form an electrode. In some embodiments, the adhesive layer may be a shaped edge adhesive layer.

In some embodiments, the electrode is a single-sided electrode. In some embodiments, the electrode is a double-sided electrode including two electrode films disposed on opposite sides of the current collector. In some embodiments, at least a portion of the electrode is a single-sided electrode and/or double-sided electrode (e.g., wherein the portion is located at an end of the electrode). In some embodiments, the double-sided electrode comprises one or two shaped electrode films of the same or different shapes. In some embodiments, the double-sided electrode comprises one or two adhesive layers of the same or different shapes. In some embodiments, the current collector may be a shaped edge current collector. In some embodiments, the double-sided electrode comprises two shaped electrodes. In some embodiments, the two shaped electrodes comprise one or more shaped electrode films.

Electrode Materials, Electrode Films, Electrodes and Energy Storage Devices

An active material (e.g., cathode active material, anode active material) may be used in the preparation of an electrode film and/or electrode for an energy storage device, such as the shaped electrode films and shaped electrodes described herein. In some embodiments, an electrode comprises a current collector and an electrode film.

In some embodiments, the active material is a cathode active material. In some embodiments, the cathode active material is selected from at least one of a metal oxide, metal sulfide, a sulfur-carbon composite, a lithium metal oxide, and a material including sulfur. In some embodiments, the cathode active material is selected from lithium iron phosphate (i.e., $LiFePO_4$ or "LFP"), lithium manganese iron phosphate (e.g., $LiMn_{0.6}Fe_{0.4}PO_4$ or "LMFP"), lithium nickel manganese cobalt oxide (i.e., $LiNi_xMn_yCo_{1-x-y}O_2$ or "NMC"), lithium nickel cobalt aluminum oxide (i.e., $LiNi_xCo_yAl_zO_2$ or "NCA"), lithium manganese oxide ("LMO"), lithium nickel manganese oxide ("LNMO"), lithium cobalt oxide ("LCO"), lithium titanate ("LTO"), or combinations thereof. In some embodiments, the cathode active material includes at least two of LFP, LMFP, NMC, NCA, LMO, LNMO, LCO, LTO, and combinations thereof. In some embodiments, the cathode active material is an iron phosphate-based active material. In some embodiments, iron phosphate-based active materials include $LiFePO_4$ (i.e., "lithium iron phosphate" and "LFP") and $LiMn_{1-x}Fe_xPO_4$ (i.e., "lithium manganese iron phosphate" and "LMFP") (e.g., $LiMn_{0.6}Fe_{0.4}PO_4$ or $LiMn_{0.8}Fe_{0.2}PO_4$). In some embodiments, the iron phosphate-based active material includes LFP. In some embodiments, the iron phosphate-based active material includes an LMFP. In some embodiments, the iron phosphate-based active material includes an LFP and/or an LMFP.

In some embodiments, the active material is an anode active material. In some embodiments, anode active materials can include, for example, an insertion material (such as carbon, graphite, and/or graphene), an alloying/dealloying material (such as silicon, silicon oxide, tin, and/or tin oxide), a metal alloy or compound (such as Si-Al, and/or Si-Sn), and/or a conversion material (such as manganese oxide, molybdenum oxide, nickel oxide, and/or copper oxide). The anode active materials can be used alone or mixed together to form multi-phase materials (such as Si-C, Sn-C, SiOx-C, SnOx-C, Si-Sn, Si-SiOx, Sn-SnOx, Si-SiOx-C, Sn-SnOx-C, Si-Sn-C, SiOx-SnOx-C, Si-SiOx-Sn, or Sn-SiOx-SnOx.). Anode active materials include common natural graphite, synthetic or artificial graphite, surface modified graphite, spherical-shaped graphite, flake-shaped graphite and blends or combinations of these types of graphite, metallic elements and its compound as well as metal-C composite for anode.

In some embodiments, the electrode film mixture and/or electrode film comprises the active material in an amount of, of about, of at least, or at least about, 70 wt.%, 75 wt.%, 80 wt.%, 85 wt.%, 86 wt.%, 87 wt.%, 88 wt.%, 89 wt.%, 90 wt.%, 91 wt.%, 92 wt.%, 93 wt.%, 94 wt.%, 95 wt.%, 96 wt.%, 97 wt.%, 98 wt.%, 98.5 wt.%, 99 wt.%, 99.5 wt.%, 99.8 wt.% or 99.9 wt.%, or any range of values therebetween.

In some embodiments, an electrode film mixture and/or electrode film (e.g., shaped electrode film) comprises a carbon material configured to reversibly intercalate lithium ions. In some embodiments, the lithium intercalating carbon is selected from a graphitic carbon, graphite, hard carbon, soft carbon and combinations thereof. For example, the electrode film of the electrode can include a binder material, one or more of graphitic carbon, graphite, graphene-containing carbon, hard carbon and soft carbon, and an electrical conductivity promoting material. In some embodiments, an electrode is mixed with lithium metal and/or lithium ions. In some embodiments, the electrode comprises the carbon material in a total amount of, of about, of at most, or at most about, 20 wt.%, 15 wt.%, 10 wt.%, 9 wt.%, 8 wt.%, 7 wt.%, 6 wt.%, 5 wt.%, 4 wt.%, 3 wt.%, 2 wt.%, 1 wt.%, or any range of values therebetween.

In some embodiments, an electrode film mixture and/or electrode film includes a conductive additive. In some embodiments, the conductive additive may comprise a conductive carbon additive, such as a carbon black. In some embodiments, the conductive additive may comprise a conductive carbon additive. In some embodiments, the conductive carbon additive comprises carbon black, carbon nanotubes, such as single-walled carbon nanotubes (SWCNTs) and multi-walled carbon nanotubes (MWCNTs). In some embodiments, the electrode film comprises the conductive additive in a total amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween. In some embodiments, each of the conductive additives is in an amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, of the electrode film, or any range of values therebetween. In some embodiments, the conductive additive is carbon black.

In some embodiments, the electrode film mixture and/or electrode film includes a binder. In some embodiments, binders can include polytetrafluoroethylene (PTFE), a polyolefin, polyalkylenes, polyethers, styrene-butadiene, co-polymers of polysiloxanes and polysiloxane, branched polyethers, polyvinylethers, a carboxymethylcellulose (CMC), co-polymers thereof, and/or combinations thereof. In some embodiments, the polyolefin can include polyethylene (PE), polypropylene (PP), polyvinylidene fluoride (PVDF), co-polymers thereof, and/or combinations thereof. For example, the binder can include polyvinylene chloride, poly(phenylene oxide) (PPO), polyethylene-block-poly(ethylene glycol), poly(ethylene oxide) (PEO), poly(phenylene oxide) (PPO), polyethylene-block-poly(ethylene glycol), polydimethylsiloxane (PDMS), polydimethylsiloxane-coalkylmethylsiloxane, co-polymers thereof, and/or combinations thereof. In some embodiments, the binder may include a thermoplastic. In some embodiments, the binder comprises a fibrillizable and/or fibrillized polymer. In certain embodiments, the binder comprises, consists essentially, or consists of a single fibrillizable and/or fibrillized binder, such as PTFE. In some embodiments, the electrode film includes, includes about, includes at most, or includes at most about, 1 wt.%, 2 wt.%, 3 wt.%, 4 wt.%, 5 wt.%, 6 wt.%, 7 wt.%, 8 wt.%, 9 wt.%, 10 wt.%, or any range of values therebetween, of a binder.

As provided herein, a "solvent-free" electrode film (e.g., shaped, unshaped) is an electrode film that contains no detectable processing solvents, processing solvent residues, or processing solvent impurities. A dry electrode film, such as a cathode electrode film or an anode electrode film that is manufactured with only dry components, may be solvent-free.

A "wet" electrode, "wet process" electrode, or slurry electrode, is an electrode or comprises an electrode film (e.g., shaped, unshaped) prepared by at least one step involving a slurry of active material(s), binder(s), and optionally additive(s), even if a subsequent drying step removes moisture from the electrode or electrode film. Thus, a wet electrode or wet electrode film will include at least one or more processing solvents, processing solvent residues, and/or processing solvent impurities.

In some embodiments, the electrode film can be a wet processed electrode film. In some embodiments, the electrode film is prepared by a wet or slurry-based electrode fabrication process. In some embodiments, the electrode film of the present disclosure can be a dry processed electrode film. In some embodiments, the electrode film is prepared by a dry electrode fabrication process. As used herein, a dry electrode fabrication process can refer to a process in which no or substantially no solvents are used to form a dry electrode film. For example, components of the active layer or electrode film, including carbon materials and binders, may comprise, consist of, or consist essentially of dry particles. The dry particles for forming the active layer or electrode film may be combined to provide a dry particle active layer mixture. In some embodiments, the active layer or electrode film may be formed from the dry particle active layer mixture such that weight percentages of the components of the active layer or electrode film and weight percentages of the components of the dry particle active layer mixture are substantially the same. In some embodiments, the active layer or electrode film formed from the dry particle active layer mixture using the dry fabrication process may be free from, or substantially free from, any processing additives such as solvents and solvent residues resulting therefrom. In some embodiments, the resulting active layer or electrode films are self-supporting films formed using the dry process from the dry particle mixture. In some embodiments, the resulting active layer or electrode films are free-standing films formed using the dry process from the dry particle mixture. A process for forming an active layer or electrode film can include fibrillizing the fibrillizable binder component(s) such that the film comprises fibrillized binder. In further embodiments, a free-standing active layer or electrode film may be formed in the absence of a current collector. In still further embodiments, an active layer or electrode film may comprise a fibrillized polymer matrix such that the film is self-supporting. It is thought that a matrix, lattice, or web of fibrils can be formed to provide mechanical structure to the electrode film.

In some embodiments, an electrode film is disposed on a current collector to form an electrode (e.g., shaped electrode). In some embodiments, a current collector can include a metallic material, such as a material comprising aluminum, nickel, copper, combinations of the foregoing. In some embodiments, a current collector comprises a pure metal. In some embodiments, a current collector comprises a metallized polymer film or metal coated polymer film. In some embodiments, the polymer comprises polyethylene terephthalate (PET), biaxially oriented polypropylene (BOPP) or a combination thereof. In some embodiments, the metal coating comprises aluminum. In some embodiments, coating the final electrode film mixture comprises forming a uniform electrode film mixture coating. In some embodiments, the current collector comprises a thickness of, of about, of at most, or at most about, 200 $\mu$m, 100 $\mu$m, 50 $\mu$m, 40 $\mu$m, 30 $\mu$m, 20 $\mu$m, 15 $\mu$m, 10 $\mu$m, 5 $\mu$m, or any range of values therebetween.

In some embodiments, the electrode is a single-sided electrode. In some embodiments, an electrode is a double-sided electrode. In some embodiments, at least a portion of the electrode is a single-sided electrode and/or double-sided electrode (e.g., wherein the portion is located at an end of the electrode). In some embodiments, the double-sided electrode includes two electrode films. In some embodiments, the double-sided electrode may include a current collector, a top electrode film, and a bottom electrode film. In some embodiments, each of the two electrode films can have any suitable shape, size and thickness.

In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode.

An electrode assembly includes a cathode, an anode, and a separator positioned between the anode and cathode. In some embodiments, the electrode assembly is a wound electrode (i.e., rolled electrode) assembly (e.g., a jelly roll). In some embodiments, the energy storage device is selected from the group consisting of a cylindrical energy storage device, a stacked prismatic energy storage device, and a spiral-wound prismatic energy storage device. In some embodiments, the shaped edge substantially prevents the formation of an electrode buckling zone or kink within the electrode.

The normalized circularity may be used to determine and/or correlate to a relatively weak core spot (e.g., a spot that may cause electrode buckling) in the wound electrode assembly. Normalized circularity for a nonideal spiral is defined as the minimum ratio between the nonideal (real) geometry versus ideal geometry on a point-by-point basis according to the equation below.

$$Normalized\ Circularity = \min_{i=1,2,..,n} \left( \frac{Nonideal\ Spiral\ Geometry}{Ideal\ Spiral\ Geometry} \right)$$

The nonideal (real) spiral geometry is given by measured Cartesian and polar coordinates ($x, y, 0, r$) and the ideal spiral geometry is derived from an Archimedean spiral according to $r = \alpha\theta + \beta$. The geometry of a spiral (ideal or nonideal) can be characterized by curvature (K), such as the polar curvature parameterization below.

$$K(\theta) = \frac{|r^2 + 2r'^2 - rr''|}{(r^2 + r'^2)^{3/2}}$$

In some embodiments, the electrode assembly comprises a normalized circularity value of, of about, of at least, or of at least about, 0.7, 0.705, 0.71, 0.715, 0.72, 0.725, 0.73, 0.735, 0.74, 0.745, 0.75, 0.76, 0.77, 0.78, 0.79, 0.8, 0.805, 0.81, 0.815, 0.82, 0.825, 0.83, 0.835, 0.84, 0.845, 0.85, 0.86, 0.87, 0.88, 0.89, 0.90, 0.91, 0.92, 0.93, 0.94, 0.95, 0.96, 0.97, 0.98, 0.99, 1, 1.05, 1.1, 1.15, 1.2 or any range of values therebetween.

The electrode disclosed herein may be used for an energy storage device. In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode. In some embodiments, the energy storage device comprises an anode electrode positioned between two cathode electrodes. In some embodiments, the anode electrode and/or the cathode electrode comprises a shaped electrode film. In some embodiments, the energy storage device is a lithium-ion battery. In some embodiments, the energy storage devices may be a battery, capacitor, capacitor-battery hybrid, fuel cell, or combinations thereof. In some embodiments, the energy storage system or energy storage device may be used for electromobility. In some embodiments, the energy storage device may be used in motor vehicles, including hybrid electric vehicles (HEV), plug-in hybrid electric vehicles (PHEV), and/or electric vehicles (EV). In some embodiments, the energy storage device used in motor vehicles, including hybrid electric vehicles (HEV), plug-in hybrid electric vehicles (PHEV), and/or electric vehicles (EV) reduces greenhouse gas emissions.

In some embodiments, the energy storage device is charged with a suitable lithium-containing electrolyte. For example, the energy storage device can include a lithium salt, and a solvent, such as a non-aqueous or organic solvent.

Generally, the lithium salt includes an anion that is redox stable. In some embodiments, the anion can be monovalent. In some embodiments, a lithium salt can be selected from lithium hexafluorophosphate ($LiPF_6$), lithium bis(trifluoromethanesulfonyl)imide (LiFSI), lithium tetrafluoroborate ($LiBF_4$), lithium perchlorate ($LiClO_4$), lithium bis(trifluoromethansulfonyl)imide ($LiN(SO_2CF_3)_2$), lithium trifluoromethansulfonate ($LiSO_3CF_3$), lithium bis(oxalato)borate ($LiB(C_2O_4)_2$), lithium bis(fluorosulfonyl)imide ($LiN(SO_2F)_2$, lithium difluoro(oxalato)borate ($LiC_2BF_2O_4$) and combinations thereof. In some embodiments, the electrolyte can include a quaternary ammonium cation and an anion selected from the group consisting of hexafluorophosphate, tetrafluoroborate and iodide. In some embodiments, the salt concentration can be about 0.1 mol/L (M) to about 5 M, about 0.2 M to about 3 M, or about 0.3 M to about 2 M. In further embodiments, the salt concentration of the electrolyte can be about 0.7 M to about 2 M. In certain embodiments, the salt concentration of the electrolyte can be about 0.2 M, about 0.3 M, about 0.4 M, about 0.5 M, about 0.6 M, about 0.7 M, about 0.8 M. about 0.9 M, about 1 M, about 1.1 M, about 1.2 M, 1.3M, 1.4M, 1.5M or values therebetween.

In some embodiments, an energy storage device can include a liquid solvent. The solvent need not dissolve every component, and need not completely dissolve any component, of the electrolyte. In further embodiments, the solvent can be an organic solvent. In some embodiments, a solvent can include one or more functional groups selected from dioxathiolane (e.g., 1,3,2-dioxathiolane-2,2-dioxide (i.e., "DTD")), carbonates, ethers and/or esters. In some embodiments, the solvent can comprise a carbonate. In further embodiments, the carbonate can be selected from cyclic carbonates such as, for example, ethylene carbonate (EC), propylene carbonate (PC), vinyl ethylene carbonate (VEC), vinylene carbonate (VC), fluoroethylene carbonate (FEC), and combinations thereof, or acyclic carbonates such as, for example, dimethyl carbonate (DMC), diethyl carbonate (DEC), ethyl methyl carbonate (EMC), 1,3-propene sultone (PRS), and combinations thereof. In some embodiments, the solvent can comprise an ester. In some embodiments, the ester is selected from methyl acetate (MA), methyl propionate (MP), ethyl acetate (EA), methyl butyrate (MB), and combinations thereof. In some embodiments, the solvent may include EC, PC, VEC, VC, FEC, DMC, DEC, EMC, MA, MP, EA, MB, and combinations thereof. In some embodiments, the solvent may include EC, DMC, DEC, EMC, MA, and combinations thereof. In some embodiments, the solvent may include EC, DMC, EMC, and combinations thereof. In some embodiments, the solvent may include a ratio of EC:DMC:EMC of 10-30:0-90:0-70.

In some embodiments, one or more solvents can be used at a concentration of, of about, of at least, or at least about, 30 wt. %, 35 wt. %, 40 wt. %, 45 wt. %, 50 wt. %, 55 wt. %, 60 wt. %, 65 wt. %, 70 wt. %, 75 wt. %, 80 wt. %, 85 wt. % or 90 wt. %, or any range of values therebetween. In some embodiments, solvents are utilized as additives in the electrolyte system, and can be used at a concentration of, of about, of at most, or at most about, 0.1 wt. %, 0.2 wt. %, 0.3 wt. %, 0.4 wt. %, 0.5 wt. %, 0.6 wt. %, 0.7 wt. %, 0.8 wt. %, 0.9 wt. %, 1 wt. %, 1.1 wt. %, 1.2 wt. %, 1.3 wt. %, 1.4 wt. %, 1.5 wt. %, 1.6 wt. %, 1.7 wt. %, 1.8 wt. %, 1.9 wt. %, 2 wt. %, 2.1 wt. %, 2.2 wt. %, 2.3 wt. %, 2.4 wt. %, 2.5 wt. %, 2.6 wt. %, 2.7 wt. %, 2.8 wt. %, 2.9 wt. %, 3 wt. %, 4 wt. %, 5 wt. %, 6 wt. %, 7 wt. %, 8 wt. %, 9 wt. % or 10 wt. %, or any range of values therebetween. For example, in some embodiments, the amount of an additive in the electrolyte is or is about in any one of the following ranges: 0.1-10 wt.%, 1-6 wt.%, 2-5 wt.%, 0.1-6 wt.%, 2-8 wt.%, 2-3 wt.%, or 1-4 wt.%.

In some embodiments, an energy storage device is created such that one electrode (e.g., anode) is larger than and overhangs the other electrode (e.g., cathode). One electrode may overhang the other in the winding direction and/or non-winding direction of the electrode assembly. Such electrode overhangs may avoid yield losses. In some embodiments, where there is no, or is substantially no, overlap and/or intermingling of the separator and the shaped electrode film (e.g., cathode electrode film), the boundary of the shaped electrode film is easier to identify and therefore improves the ability to form a counter electrode (e.g., anode electrode) with an overhang.

PCT Patent Application Nos. PCT/US2019/059691, filed on November 4, 2019, and PCT/US2021/050992, filed on September 17, 2021, are hereby expressly incorporated by reference in their entirety for all purposes (e.g., configurations of electrodes, electrode films, and current collectors).

EXAMPLES

Example embodiments of the present disclosure, including processes, materials and/or resultant products, are described in the following examples.

Example 1 - Normalized Circularity Measurement Simulation

Normalized circularity or winding circularity values were simulated for variously shaped electrode films. Compared to a baseline or unshaped electrode film (e.g., straight edge), other shapes such as angular, inverse or reverse angular, chevron, and inverse or reverse chevron showed a substantial increase in normalized circularity.

Example 2 - Normalized Circularity Measurements Based on Shaped Electrode Films

Normalized circularity or winding circularity values were measured by taking cross sections of electrode assemblies. Ten electrode assemblies each with two different shaped edges, straight edge and angular edge, were removed from the winding conveyor prior to testing. A shaped electrode film including an angular edge showed significantly higher normalized circularity values when compared to a baseline or unshaped electrode film (e.g., rectangular).

Example 3 - Electrode Buckling Based on Number of Cycles

Similar to Example 2, normalized circularity values were measured by taking cross sections of electrode assemblies. Electrode assemblies with two different shaped edges, straight edge and chevron edge, were built into functional cells and sent to formation. The computed tomography (CT) scans were taken before the start of cycling (e.g., 0 Wh/Wh), after 50 Wh/Wh and after 100 Wh/Wh. A normalized circularity value below 0.6 is generally considered the threshold for electrode buckling of an electrode assembly and therefore, cells that had a normalized circularity value below 0.6 were removed from the cycling test. A shaped electrode film including a chevron edge showed stable normalized circularity values after 50 Wh/Wh and 100 Wh/Wh when compared to a baseline or unshaped electrode film (e.g., rectangular).

While certain embodiments of the inventions have been described, these embodiments have been presented by way of example only, and are not intended to limit the scope of the disclosure. Indeed, the novel methods and systems described herein may be embodied in a variety of other forms. Furthermore, various omissions, substitutions and changes in the systems and methods described herein may be made without departing from the spirit of the disclosure. The accompanying claims and their equivalents are intended to cover such forms or modifications as would fall within the scope and spirit of the disclosure. Accordingly, the scope of the present inventions is defined only by reference to the appended claims.

Features, materials, characteristics, or groups described in conjunction with a particular aspect, embodiment, or example are to be understood to be applicable to any other aspect, embodiment or example described in this section or elsewhere in this specification unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The protection is not restricted to the details of any foregoing embodiments. The protection extends to any novel one, or any novel combination, of the features disclosed in this specification (including any accompanying claims, abstract and drawings), or to any novel one, or any novel combination, of the steps of any method or process so disclosed.

Furthermore, certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a claimed combination can, in some cases, be excised from the combination, and the combination may be claimed as a subcombination or variation of a subcombination.

Moreover, while operations may be depicted in the drawings or described in the specification in a particular order, such operations need not be performed in the particular order shown or in sequential order, or that all operations be performed, to achieve desirable results. Other operations that are not depicted or described can be incorporated in the example methods and processes. For example, one or more additional operations can be performed before, after, simultaneously, or between any of the described operations. Further, the operations may be rearranged or reordered in other implementations. Those skilled in the art will appreciate that in some embodiments, the actual steps taken in the processes illustrated and/or disclosed may differ from those shown in the figures. Depending on the embodiment, certain of the steps described above may be removed, others may be added. Furthermore, the features and attributes of the specific embodiments disclosed above may be combined in different ways to form additional embodiments, all of which fall within the scope of the present disclosure. Also, the separation of various system components in the implementations described above should not be understood as requiring such separation in all implementations, and it should be understood that the described components and systems can generally be integrated together in a single product or packaged into multiple products. For example, any of the components for an energy storage system described herein can be provided separately, or integrated together (e.g., packaged together, or attached together) to form an energy storage system.

For purposes of this disclosure, certain aspects, advantages, and novel features are described herein. Not necessarily all such advantages may be achieved in accordance with any particular embodiment. Thus, for example, those skilled in the art will recognize that the disclosure may be embodied or carried out in a manner that achieves one advantage or a group of advantages as taught herein without necessarily achieving other advantages as may be taught or suggested herein.

Conditional language, such as "can," "could," "might," or "may," unless specifically stated otherwise, or otherwise understood within the context as used, is generally intended to convey that certain embodiments include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

Conjunctive language such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z.

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately", "about", "generally," and "substantially" may refer to an amount that is within less than 10% of, within less than 5% of, within less than 1% of, within less than 0.1% of, and within less than 0.01% of the stated amount, depending on the desired function or desired result.

The scope of the present disclosure is not intended to be limited by the specific disclosures of preferred embodiments in this section or elsewhere in this specification, and may be defined by claims as presented in this section or elsewhere in this specification or as presented in the future. The language of the claims is to be interpreted broadly based on the language employed in the claims and not limited to the examples described in the present specification or during the prosecution of the application, which examples are to be construed as non-exclusive.

## Claims

1. A shaped electrode film, comprising:

   an active material;
   a length, a length end and a width, wherein the length is greater than the width; and
   a shaped edge located at the length end, wherein the shaped edge comprises a taper angle and a taper distance.

2. The shaped electrode film of Claim 1, further comprising a second shaped edge located at a second length end.

3. The shaped electrode film of Claim 1 or 2, wherein the shaped edge is selected from the group consisting of an angular edge, a double-angular edge, a chevron edge, a double-chevron edge, a rounded edge, a double-rounded edge, an inverse thereof, a reverse thereof, and combinations thereof.

4. The shaped electrode film of any one of Claims 1-3, wherein the taper angle is about 10°-45°.

5. The shaped electrode film of any one of Claims 1-4, wherein the taper distance is at most about 25 mm.

6. A shaped electrode, comprising the shaped electrode film of any one of Claims 1-5 and a current collector, wherein the shaped electrode film is disposed over the current collector.

7. An electrode assembly, comprising:

   the shaped electrode of Claim 6;
   a second electrode; and
   a separator positioned between the shaped electrode and the second electrode;
   preferably wherein the electrode assembly is a wound electrode assembly.

8. The electrode assembly of Claim 7, wherein the second electrode comprises a second shaped edge.

9. The electrode assembly of Claim 7 or 8, wherein the electrode assembly is selected from the group consisting of a cylindrical energy storage device, and a spiral-wound prismatic energy storage device.

10. The electrode assembly of any one of Claims 7-9, wherein the electrode assembly comprises a normalized circularity value of at least about 0.8; preferably wherein the electrode assembly comprises a normalized circularity value of at least about 0.9.

11. An energy storage device, comprising:

the electrode assembly of any one of Claims 7-10;
an electrolyte; and
a housing, wherein the electrode assembly and the electrolyte are disposed within the housing.

12. A method of forming a shaped electrode film, comprising:

providing an electrode film comprising a length, a length end and a width, wherein the length is greater than the width; and
shaping the length end to form a shaped electrode film comprising a shaped edge.

13. The method of Claim 12, further comprising forming a shaped electrode comprising the shaped electrode film disposed over a current collector; preferably wherein the current collector is a shaped edge current collector; and/or wherein an adhesive layer is disposed between the shaped electrode film and the current collector; preferably wherein the adhesive layer is a shaped edge adhesive layer.

14. The method of Claim 12, further comprising disposing the electrode film over a current collector; preferably wherein shaping the length end comprises removing a scrap electrode film of the electrode film from the current collector.

15. The method of Claim 12, further comprising disposing the shaped electrode film over a current collector.

**FIG. 1A**

**FIG. 1B**

**FIG. 2A**

**FIG. 2B**

**FIG. 3A**

**FIG. 3B**

**FIG. 3C**

400

Provide an electrode film — 410

Shape a length end of the electrode film to form a shaped electrode film including a shaped edge — 420

**FIG. 4A**

430

Provide an electrode film — 435

↓

Shape a length end of the electrode film to form a shaped electrode film including a shaped edge — 440

↓

Dispose the shaped electrode over a current collector to form a shaped electrode — 450

**FIG. 4B**

460

| Provide an electrode film | 465 |

↓

| Dispose the electrode film over a current collector | 480 |

↓

| Shape a length end of the electrode film by removing a scrap electrode film off the electrode film from the current collector | 485 |

**FIG. 4C**

500A

Shaped Electrode Film — 505A

Current Collector — 530A

**FIG. 5A**

500B

Shaped Electrode Film — 505B

Shaped Edge Current Collector — 530B

**FIG. 5B**

500C

Shaped Electrode Film — 505C

Adhesive Layer — 520C

Current Collector — 530C

**FIG. 5C**

500D

| Shaped Electrode Film | 505D |

| Shaped Edge Adhesive Layer | 520D |

| Current Collector | 530D |

**FIG. 5D**

500E

Shaped Electrode Film — 505E

Adhesive Layer — 520E

Shaped Edge Current Collector — 530E

Shaped Edge Adhesive Layer — 540E

Shaped Electrode Film — 550E

**FIG. 5E**

Europäisches
Patentamt

European
Patent Office

Office européen
des brevets

# EUROPEAN SEARCH REPORT

**Application Number**

EP 25 20 4106

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 029 763 B1 (NEC ENERGY DEVICES LTD [JP]; ENVISION AESC ENERGY DEVICES LTD [JP]) 9 October 2019 (2019-10-09) * figures 11-13 * * figures 17-18 * * paragraph [0041] * | 1,2,6-9, 11-14 | INV. H01M4/04 H01M4/62 H01M4/66 H01M10/0587 H01M50/103 H01M50/107 |
| A | EP 3 872 918 A1 (PANASONIC IP MAN CO LTD [JP]) 1 September 2021 (2021-09-01) * paragraph [0022] * * paragraph [0024] - paragraph [0025] * * figure 1 * | 1-15 | |
| A | CN 115 066 776 A (MURATA MANUFACTURING CO) 16 September 2022 (2022-09-16) * the whole document * | 1-15 | |

| TECHNICAL FIELDS SEARCHED (IPC) |
|---|
| H01M |

The present search report has been drawn up for all claims

| Place of search | Date of completion of the search | Examiner |
|---|---|---|
| Munich | 20 March 2026 | Tylus, Urszula |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 20 4106

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2026

| Patent document cited in search report | | Publication date | Patent family member(s) | | Publication date |
|---|---|---|---|---|---|
| EP 3029763 | B1 | 09-10-2019 | CN | 105474454 A | 06-04-2016 |
| | | | EP | 3029763 A1 | 08-06-2016 |
| | | | JP | 6381045 B2 | 29-08-2018 |
| | | | JP | WO2015015663 A1 | 02-03-2017 |
| | | | US | 2016181650 A1 | 23-06-2016 |
| | | | WO | 2015015663 A1 | 05-02-2015 |
| EP 3872918 | A1 | 01-09-2021 | CN | 112868126 A | 28-05-2021 |
| | | | EP | 3872918 A1 | 01-09-2021 |
| | | | JP | 7320738 B2 | 04-08-2023 |
| | | | JP | WO2020084986 A1 | 09-09-2021 |
| | | | US | 2021376391 A1 | 02-12-2021 |
| | | | WO | 2020084986 A1 | 30-04-2020 |
| CN 115066776 | A | 16-09-2022 | CN | 115066776 A | 16-09-2022 |
| | | | JP | 7428235 B2 | 06-02-2024 |
| | | | JP | 7722484 B2 | 13-08-2025 |
| | | | JP | 2024045276 A | 02-04-2024 |
| | | | JP | 2025156445 A | 14-10-2025 |
| | | | JP | WO2021176906 A1 | 10-09-2021 |
| | | | US | 2022367920 A1 | 17-11-2022 |
| | | | US | 2024405294 A1 | 05-12-2024 |
| | | | WO | 2021176906 A1 | 10-09-2021 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019059691 W
- US 2021050992 W